# EUROPEAN PATENT APPLICATION

(11) **EP 2 980 357 A1**
(43) Date of publication of application: **03.02.2016**
(21) Application number: 14179539.3
(22) Date of filing: 01.08.2014
(51) Int. Cl.: F01D 5/18

(54) **Gas turbine aerofoil trailing edge**

(71) Applicant: Siemens Aktiengesellschaft, 80333 München (DE)
(72) Inventor: Wong, Li Shing, Lincoln, LN2 5AU (GB)
(74) Representative: Maier, Daniel Oliver

(57) **Abstract**

A turbine aerofoil (1) comprises:
- a leading edge (3),
- a trailing edge (5),
- an exterior surface including a suction side (7) and a pressure side (9),
- at least an internal cavity (11A-11D) for forming a cooling circuit comprising cooling slots (60, 61, 62) between the suction side (7) and the pressure side (9),
wherein the aerofoil includes a first trailing portion (51) along the trailing edge (5) where both the suction side (7) and the pressure side (9) extend from the leading edge (3) up to the trailing edge (5) in order that the first cooling slot (61) is formed at the trailing edge (5), and at least a second trailing portion (51, 52) where the suction side (7) extends from the leading edge (3) up to the trailing edge (5) and the pressure side (9) extends from the leading edge (3) up to a cut-back edge (4) distanced from the trailing edge (5), in order that at least a second cooling slot (61, 62) is provided at the cut-back edge (4).

## Description

### Field of invention

The present invention relates to gas turbine aerofoils and, more particularly, to gas turbine aerofoil trailing edges provided with cooling slots.

### Art Background

In a gas turbine engine, air is pressurized in a compressor and mixed with fuel in a combustor for generating hot combustion gases. The hot gases are then channelled towards a gas turbine which transforms the energy from the hot gases into work for powering the compressor and other devices which converts power , for example an upstream fan in a typical aircraft turbofan engine application, or a generator in power generation application.

The gas turbine stages include stationary turbine nozzles having a row of hollow vanes which channel the combustion gases into a corresponding row of rotor blades extending radially outwardly from a supporting rotor disk. The vanes and blades may have corresponding hollow aerofoils. Aerofoils may be designed and manufactured hollow in order save weight, to change its eigenfrequency or to include a cooling circuit therein. In the latter case, the cooling gas which circulates inside the cooling circuits is typically bleed air from the compressor discharge.

The present invention relates to a turbine hollow aerofoil which can be used in a gas turbine vane or blade.

In the following, the terms upstream and downstream refer to the flow direction of the airflow and/or working hot gas flow through the gas turbine engine. The terms axial and radial are made with reference to a rotational axis of the gas turbine engine.

Each aerofoil includes a generally concave pressure sidewall and, an opposite, generally convex suction sidewall extending radially outwardly along a span from an aerofoil base to an aerofoil tip and axially in a chordwise direction between a leading and a trailing edge. For a turbine blade, the aerofoil span extends from a root base at a radially inner platform of a blade carrying disc to a radially outer end, which may be a free end, a tip spaced from a surrounding turbine casing or shroud reaching between adjacent blades and having sealing features that together with the casing reduces the leakage flow over the blade. For a turbine vane, the aerofoil extends from a root base integral with a radially inner band of a turbine stator to a radially outer tip integral with an outer band of the stator.

Each turbine aerofoil also initially increases in thickness aft of the leading edge and then decreases in thickness up to the relatively thin or sharp trailing edge where the pressure and suction sidewalls join together. The wider portion of the aerofoil has sufficient internal space for accommodating the internal cooling circuits.

The trailing edge is typically thin and thermally protected by a single cooling slot elongated radially from the aerofoil base to the aerofoil tip or by a plurality of trailing edge cooling slots at a breakout immediately upstream of the trailing edge. Through the cooling slots, cooling air from the cooling circuits is discharged in order to cool the trailing edge.

The single cooling slot design is normally preferred for maximising the cooling effect at the trailing edge.

However, for creating such design both the pressure and the suction sidewalls has to extend up to the trailing edge, thus preventing to minimising the thickness thereof. Thick trailing edges result in higher losses and trailing edge losses are a significant fraction of the overall losses of a turbo machinery aerofoil.

For this reason, in order to achieve a lower effective trailing edge, cooled aerofoils with a so-called "cutback" design at the trailing edge have been developed. This design is realised by taking away material on the pressure side of the aerofoil from the trailing edge up to a cutback edge towards the leading edge. Ribs, which are normally attached to the inner side of the suction sidewall and which normally extend axially from the cutback edge to the leading edge, divide the flow of cooling air between a plurality of cutback cooling slots.

This solution provides very thin trailing edges which can provide big improvements on the aerodynamic efficiency of the aerofoil. The cutback design reduces the so called "blockage loss" associated with eddies formed by the trailing edge bluff body.

However, with the cutback design there is also the risk the cooling stream lift off the trailing edge prior to reaching the end of the aerofoil, thus limiting the cooling efficiency of the cooling stream. This could lead the temperature to increase along the trailing edge up to values which could cause a portion of the trailing edge to oxidize away.

It is therefore still desirable to define a suitable design for the trailing edge of a gas turbine aerofoil which could, at the same time, encompass the advantages and minimize the disadvantages of the two known solution described above.

### Summary of the Invention

It may be an object of the present invention to provide a gas turbine aerofoil, which provides an optimal compromise between cooling, aerodynamic efficiency and aerofoil durability.

In order to achieve the objects defined above, a gas turbine aerofoil according to the independent claim is provided. The dependent claims describe advantageous developments and modifications of the invention.

According to the present invention, a turbine aerofoil comprises:
- a leading edge,
- a trailing edge,
- an exterior surface including a suction side extending from the leading edge towards the trailing edge and a pressure side extending from the leading edge towards the trailing edge and being located opposite to the suction side on the aerofoil,
- an internal cavity for forming a cooling circuit comprising cooling slots between the suction and the pressure sides for promoting the cooling of the trailing edge,
wherein the aerofoil includes a first trailing portion along the trailing edge where both the suction side and the pressure side extend from the leading edge up to the trailing edge in order that the first cooling slot is formed at the trailing edge, and at least a second trailing portion where the suction side extends from the leading edge up to the trailing edge and the pressure side extends from the leading edge up to a cut-back edge distanced from the trailing edge, in order that at least a second cooling slot is provided at the cut-back edge.

By "cooling slot" it is meant any passage between the suction and the pressure sides located at the trailing edge or close to it, which allows a cooling fluid to exit the cooling circuit inside the aerofoil in order to be directed towards the trailing edge.

The first trailing portion exhibits a centralized cooling slot at the trailing edge, where both the suction and the pressure side end, thus maximising the cooling effect at the trailing edge. The second trailing portion exhibits the "cut-back" cooling slot, thus allowing minimizing the trailing edge thickness and maximizing aerodynamic efficiency. Advantageously, the present invention teach to differentiate the trailing edge geometry in order to provide a strongest cooling effect where needed, while at same time leaving the aerodynamic benefits of the cut-back design, where a lower cooling effect may be accepted.

According to an exemplary embodiment of the present invention, the leading and trailing edges extends from a base to a tip of the aerofoil, the second trailing portion being adjacent to one of the base or tip of the turbine aerofoil.

According to another exemplary embodiment of the present invention, the leading and trailing edges extends from a base to a tip of the aerofoil, the first trailing portion being adjacent to one of the base or tip of the turbine aerofoil.

According to another exemplary embodiment of the present invention, the aerofoil further comprises at least a third trailing portion where the suction side extends from the leading edge up to the trailing edge and the pressure side extends from the leading edge up to a cut-back edge distanced from the trailing edge, the first trailing portion being interposed between the second and the third trailing portions.

In a gas turbine, calculations and experience have revealed that radial temperature profile in the mainstream annulus features in general a curve shape with one peak or more peaks. Particularly, but not exclusively, the radial temperature profile features a parabolic like shape with temperature peak corresponding to the hot-streak from combustion profiles. The computational prediction of the general radial location of the hottest region allows defining the positioning of the first trailing portion with centralized slot. The shape of the radial temperature profile also changes as the hot gas expands through the turbine due to mixing of cooling air and losses. Therefore, also the positioning and length of first trailing portion can change from aerofoil to aerofoil, along the axis of the gas turbine. This means that there could be at least two aerofoils, distanced along the axis of the gas turbine engine, which are different to each other in terms of length of the first trailing portion and/or of the length of the second trailing portion and/or of the length of the third trailing portion.

According to another exemplary embodiment of the present invention, the first portion has a length along the trailing edge being between 10% and 50% of the total length of the trailing edge.

Advantageously, the present invention can be applied to aerofoils of both blades and vanes of a gas turbine.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 is a longitudinal sectional view of a gas turbine engine including a plurality of stator vane aerofoils and a plurality of rotor blade aerofoils according to the present invention,
Fig. 2 shows a bottom view of an aerofoil according to the present invention,
Fig. 3 shows a sectional view taken along the sectional line III-III in Fig. 2,
Fig. 4 shows a sectional view taken along the sectional line IV-IV in Fig. 2.

### Detailed Description

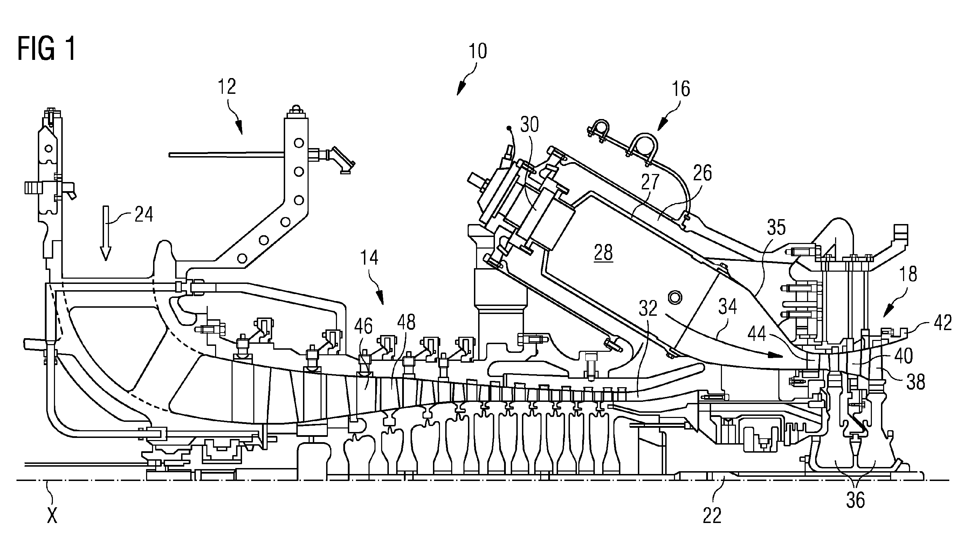

**Fig. 1** shows an example of a gas turbine engine 10 in a sectional view. The gas turbine engine 10 comprises, in flow series, an inlet 12, a compressor section 14, a combustor section 16 and a turbine section 18 which are generally arranged in flow series and generally in the direction of a longitudinal or rotational axis X. The gas turbine engine 10 further comprises a shaft 22 which is rotatable about the rotational axis 20 and which extends longitudinally through the gas turbine engine 10. The shaft 22 drivingly connects the turbine section 18 to the compressor section 12.

In operation of the gas turbine engine 10, air 24, which is taken in through the air inlet 12 is compressed by the compressor section 12 and delivered to the combustion section or burner section 16. The compressor section 12 comprises a plurality of stages, each stage including a plurality of guiding compressor vanes 46 attached to a stator of the compressor section 12 and a plurality of rotor compressor blades 48 attached to the shaft 22, downstream of the vanes 46.

The burner section 16 comprises a burner plenum 26, one or more combustion chambers 28 defined by a double wall can 27 and at least one burner 30 fixed to each combustion chamber 28. The combustion chambers 28 and the burners 30 are located inside the burner plenum 26. The compressed air passing through the compressor 12 enters a diffuser 32 and is discharged from the diffuser 32 into the burner plenum 26 from where a portion of the air enters the burner 30 and is mixed with a gaseous or liquid fuel. The air/fuel mixture is then burned and the combustion gas 34 or working gas from the combustion is channelled via a transition duct 35 to the turbine section 18.

The turbine section 18 comprises a number of blade carrying discs 36 attached to the shaft 22. In the present example, two discs 36 each carry an annular array of turbine blades 38. However, the number of blade carrying discs could be different, i.e. only one disc or more than two discs. In addition, turbine guiding vanes 40, which are fixed to a stator 42 of the gas turbine engine 10, are disposed between the turbine blades 38. Between the exit of the combustion chamber 28 and the leading turbine blades 38 inlet guiding vanes 44 are provided.

The combustion gas from the combustion chamber 28 enters the turbine section 18 and drives the turbine blades 38 which in turn rotate the shaft 22. The guiding vanes 40, 44 serve to optimise the angle of the combustion or working gas on to the turbine blades 38.

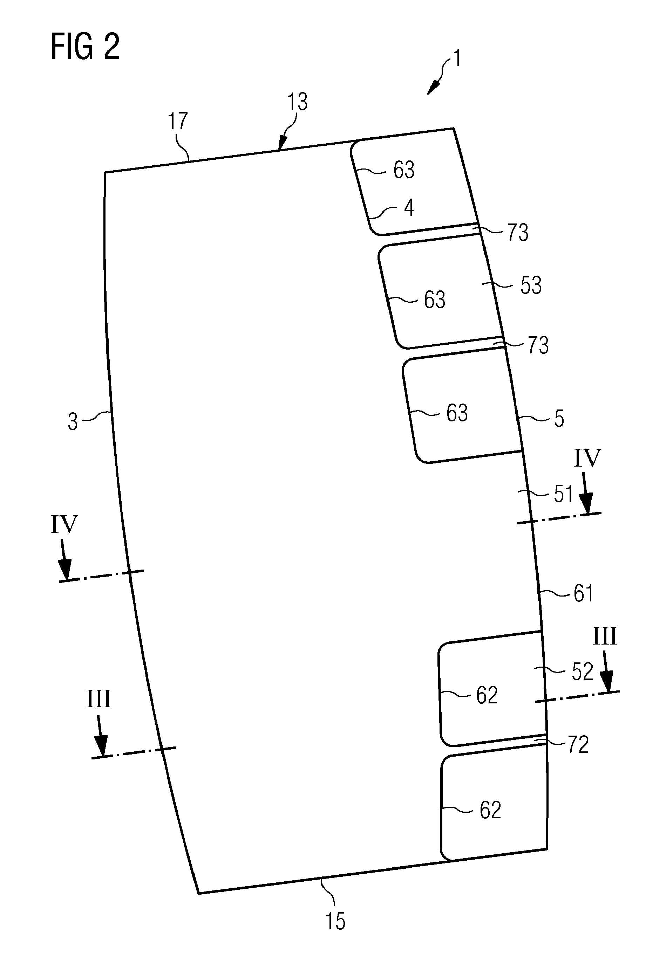

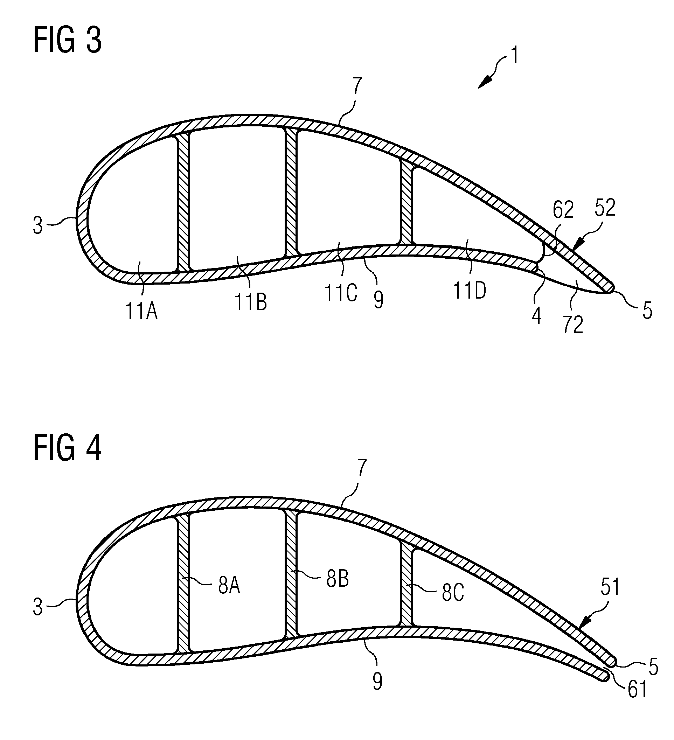

An inventive turbine aerofoil 1 is shown in **Figs. 2****,** **3** and **4****.** The inventive turbine aerofoil 1 may be used, in general, in the turbine blades 38 or in the turbine guiding vanes 40.

The turbine aerofoil 1 comprises a cast aerofoil body 13, a leading edge 3 at which the flowing combustion gases arrive at the aerofoil 1 and a trailing edge 5 at which the combustion gases leave the aerofoil 1. The exterior surface of the aerofoil 1 is formed by a convex suction side 7 and a less convex, and typically concave, pressure side 9 which is formed opposite to the suction side 7. Both the suction side 7 and the pressure side 9 extend from the leading edge 3 towards the trailing edge 5.

With respect to rotational axis X, both the leading and trailing edges 3, 5 span radially from a base 15 to a tip 17 of the aerofoil 1. For a turbine blade 38, the base 15 is fixed to an inner platform of the respective blade carrying disc 36, while the tip 17 is closed but spaced from a surrounding turbine shroud provided in the stator 42. For a turbine vane 40, the base 15 is fixed to a radially inner band of the turbine stator 42, while the tip 17 is fixed to a radially outer band of the turbine stator 42.

The aerofoil body 13 is hollow and comprises a plurality of internal cavities (four cavities 11A to 11D in the embodiment of the attached figures) to allow a cooling fluid, typically bleed air from the discharge of the compressor section 12, to flow therethrough in order to cool the aerofoil body 13. The internal cavities 11A-11D are separated by means of a plurality of partition walls (three partition walls 8A to 8C in the embodiment of the attached figures) and connected to each other for forming a cooling circuit by means of a plurality of passages (not shown in the attached figures). Moreover, a certain amount of cooling fluid is allowed to leave the internal cavities 11A to 11D through cooling holes (not shown in the attached figures) which are provided in the exterior surface of the aerofoil body 13 to let the cooling fluid to form a cooling film over the suction side 7 and the pressure side 9.

Along the trailing edge 5, the aerofoil 1 includes a plurality of different portions (three portions 51, 52, 53 in the embodiment of the attached figures), having different positions, shape and function. In the first trailing portion 51, both the suction side 7 and the pressure side 9 extend from the leading edge 3 up to the trailing edge 5 in order that a cooling slot 61 is formed at the trailing edge 5. At the first trailing portion 51, the cooling effect of the fluid exiting the cooling slot 61 is maximised. The position of the first trailing portion 51 is defined, for example by means of computational fluid dynamic tools, in order to be coincident with the hottest area of the trailing edge 5. The length of the first trailing portion 51 along the trailing edge 5 is between 10% and 50% of the total length of the trailing edge 5.

More preferably, the length of the first trailing portion 51 along the trailing edge 5 is between 25% and 35% of the total length of the trailing edge 5.

According to a different embodiment of the present invention (not shown), the first trailing portion 51 comprises one or more axial ribs between the suction side 7 and the pressure side 9, in order to divide the trailing edge cooling slot 61 into a plurality of cooling slots.

A second trailing portion 52 is adjacent to the base 15 and extends up to the first trailing portion 51. The second trailing portion 52 exhibits a so called "cut-back" design, i.e. with the suction side 7 extending from the leading edge 3 up to the trailing edge 5 and the pressure side 9 extending from the leading edge 3 up to a cut-back edge 4, distanced from the trailing edge 5. At the cut-back edge 4, two further cooling slots 62 are provided, between the suction side 7 internal surface, i.e. the surface facing the pressure side 9, and the cut-back edge 4. The cooling slots 62 allow the cooling fluid from the last cooling cavity 11D to be directed towards the trailing edge 5. A rib 72 attached to the suction side 7 internal surface, extends axially from the cut-back edge 4 to the trailing edge 5, to separate the cooling slots 62 from each other. According to a different embodiment of the present invention, the second trailing portion 52 comprises a plurality of ribs 72 and therefore a number of cooling slots greater than three. The ribs 72 provide support to the suction side 7 in the region between the cut-back edge 4 and the trailing edge 5, thus improving the overall stiffness of the aerofoil 1.

According to different embodiments of the present invention (not shown), the first trailing portion 51 is either adjacent to the base 15 or to the tip 17 of the turbine aerofoil 1. Extending the first trailing portion 51 up to the base 15 or to the tip 17 permits to control the stress level at the base 15 or at the tip 17.

According to a different embodiment of the present invention (not shown), particularly when the length of the second trailing portion 52 along the trailing edge 5 is short, ribs are not present and a single cooling slot 62 is present.

At the second trailing portion 52, the thickness of the trailing edge 5 is defined only by the thickness of the suction side 7. This allows to minimizing the thickness of the trailing edge 5, the maximising the aerodynamic efficiency thereof.

The aerofoil 1 further comprises a third trailing portion 53 having a cut-back design. The third trailing portion 53 is adjacent to the tip 17 of the aerofoil 17 and extends up to the first trailing portion 51, in such a way that the first trailing portion 51 is interposed between the second and the third trailing portions 52, 53.

Three further cooling slots 63 are provided at the cut-back edge 4, by means of two ribs 73 attached to the suction side 7 internal surface and extending axially from the cut-back edge 4 to the trailing edge 5.

In general, the lengths of the second and third trailing portions 52, 53 are different depending on the length and position of the first trailing portion 51, i.e. depending on the position and extension of the hottest area of the trailing edge 5.

In general, also the number of the ribs 72 in the second trailing portion 52 is different from the number of the ribs 73 in the third trailing portion 53. The number of ribs 72 or 73, normally depends from the length of the second trailing portion 52 and of the third trailing portion 53, respectively, in order that the second trailing portion 52 and the third trailing portion 53 are divided by the ribs 72, 73 in plurality of cooling slots 62, 63 having all the same length along the cut-back edge 4.

According to a different embodiment of the present invention, the third trailing portion 53 is not present, the first trailing portion 51 being adjacent to one or the other of the base 15 and the tip 17 of the aerofoil 1.

According to an embodiment of the present invention (not shown), the second trailing portion 52 and the third trailing portion 53 are identical to each other, in particular in terms of length and number of ribs 72, 73.

## Claims

1. Turbine aerofoil (1) comprising:
- a leading edge (3),
- a trailing edge (5),
- an exterior surface including a suction side (7) extending from the leading edge (3) towards the trailing edge (5) and a pressure side (9) extending from the leading edge (3) towards the trailing edge (5) and being located opposite to the suction side (7) on the aerofoil (1),
- at least an internal cavity (11A-11D) for forming a cooling circuit comprising cooling slots (61, 62, 63) between the suction side (7) and the pressure side (9) for promoting the cooling of the trailing edge (5),
wherein the aerofoil includes a first trailing portion (51) along the trailing edge (5) where both the suction side (7) and the pressure side (9) extend from the leading edge (3) up to the trailing edge (5) in order that the first cooling slot (61) is formed at the trailing edge (5), and at least a second trailing portion (52, 53) where the suction side (7) extends from the leading edge (3) up to the trailing edge (5) and the pressure side (9) extends from the leading edge (3) up to a cut-back edge (4) distanced from the trailing edge (5), in order that at least a second cooling slot (62, 63) is provided at the cut-back edge (4).

2. The turbine aerofoil (1) according to claim 1, wherein the leading and trailing edges (3, 5) extend from a base (15) to a tip (17) of the aerofoil (1), the second trailing portion (52, 53) being adjacent to one of the base (15) or tip (17) of the turbine aerofoil (1).

3. The turbine aerofoil (1) according to claim 1, wherein the leading and trailing edges (3, 5) extend from a base (15) to a tip (17) of the aerofoil (1), the first trailing portion (51) being adjacent to one of the base (15) or tip (17) of the turbine aerofoil (1).

4. The turbine aerofoil (1) according to claim 1, wherein the aerofoil (1) further comprises at least a third trailing portion (53) where the suction side (7) extends from the leading edge (3) up to the trailing edge (5) and the pressure side extends from the leading edge (3) up to the cut-back edge (4), the first trailing portion (51) being interposed between the second and the third trailing portions (52, 53).

5. The turbine aerofoil (1) according to claim 1, wherein the first trailing portion (51) has a length along the trailing edge (5) being between 10% and 50% of the total length of the trailing edge (5).

6. The turbine aerofoil (1) according to claim 1, wherein the second portion (52, 53) comprises at least a rib (72, 73) extending from the cut-back edge (4) to the trailing edge (5).

7. The turbine aerofoil (1) according to claim 6, wherein the second portion (52) and/or third portion (53) comprises a plurality of ribs (72, 73) in order to define a plurality of cooling slots (62, 63) at the cut-back edge (4), having all the same length along the cut-back edge (4).

8. Gas turbine engine (10) including a plurality of aerofoils (1) according to one of the previous claims.

9. The gas turbine engine (10) according to claim 8, wherein the aerofoils (1) are a plurality of vanes of the gas turbine.

10. The gas turbine engine (10) according to claim 8, wherein the aerofoils are a plurality of blades of the gas turbine.

11. The gas turbine engine (10) according to claim 8, wherein in at least one of the aerofoils (1) the length of the first trailing portion (51) and/or the length of the second trailing portion (52, 53) are different from the corresponding lengths in at least another of the aerofoils (1), one and the other of said aerofoils being distanced along an axis (X) of the gas turbine engine (10).
